# FASCICULE DE BREVET EUROPEEN

(11) **EP 2 587 109 B1**
(45) Date de publication et mention de la délivrance du brevet: **07.12.2016**
(21) Numéro de dépôt: 12189868.8
(22) Date de dépôt: 25.10.2012
(51) Int. Cl.: F16L 37/18

(54) **DISPOSITIF DE RACCORD**
ANSCHLUSSVORRICHTUNG
CONNECTING DEVICE

(30) Priorité: 25.10.2011 FR 1159652
(43) Date de publication de la demande: 01.05.2013
(73) Titulaire: STÄUBLI FAVERGES, 74210 Faverges (FR)
(72) Inventeur: Tiberghien, Alain-Christophe, 74320 SEVRIER (FR); Durieux, Christophe, 73200 GILLY SUR ISERE (FR); Bahno, Igor, 73200 ALBERTVILLE (FR)
(74) Mandataire: Lavoix

(56) Documents cités:
- GB-A- 372 926
- GB-A- 551 795
- US-A- 3 868 132
- US-A- 4 086 939
- US-A- 5 806 832

## Description

La présente invention concerne un dispositif de raccord. L'invention concerne également un raccord comprenant un tel dispositif.

Le domaine de l'invention est celui des connecteurs adaptés au passage de fluides sous hautes pressions et hautes températures, qui exigent une sécurité maximale et imposent une étanchéité par pièces métalliques. Par exemple, la pression du fluide est de l'ordre de 200 bars, tandis que la température est de l'ordre de 300 °C.

En particulier, le dispositif de raccord selon l'invention est prévu pour être raccordé à des éléments de type tubes traversant une plaque. Dans ce cas, les opérations de montage et démontage du tube à travers la plaque doivent être rapides et ergonomiques.

GB-A-201 061 décrit un dispositif de raccord entre deux tubes. Un premier tube est vissé dans un élément principal de couplage muni d'une première surface tronconique. Le second tube est vissé dans une bague d'embout munie d'une deuxième surface tronconique et sur laquelle est montée une rondelle taraudée. Une étanchéité tronc de cône sur tronc de cône est réalisée au sein du dispositif, par actionnement d'un levier à came monté sur l'élément de couplage après insertion du deuxième tube dans la bague. Les jeux axiaux dans le dispositif, entre la rondelle et la came, doivent être rattrapés par action sur la rondelle taraudée, lors d'une étape préalable à l'actionnement du levier. En outre, si le rattrapage des jeux est imparfait malgré l'actionnement de la rondelle et du levier, alors l'étanchéité n'est pas réalisée. De plus, comme le dispositif est plus large que les tubes qui y sont vissés, le démontage du raccord à travers une plaque est peu commode. Ainsi, le dispositif de raccord manque de fiabilité et d'ergonomie.

GB-A-551 795 décrit un raccord adapté pour être connecté à un tube. Le raccord comprend notamment un carter, une bague annulaire déformable, un corps d'embout et un levier. L'actionnement du levier déplace le corps d'embout dans le carter, de sorte que le corps d'embout vient écraser la bague déformable autour du tube. Un tel raccord n'est pas adapté à la transmission de fluides sous hautes pressions et hautes températures.

Le but de la présente invention est de proposer un dispositif de raccord procurant une connexion fiable et ergonomique entre deux éléments de raccord, en particulier un élément mâle traversant une plaque et un embout de raccord muni d'un levier à came.

A cet effet, l'invention a pour objet un dispositif de raccord, adapté pour transmettre des fluides sous pression, ce dispositif de raccord étant relié à une première canalisation et configuré pour s'accoupler avec un élément de raccord relié à une deuxième canalisation, avec une première pièce parmi le dispositif et l'élément de raccord qui est configurée comme un élément mâle et une deuxième pièce parmi le dispositif et l'élément de raccord qui est configurée comme un élément femelle, le dispositif de raccord comprenant :
- un corps d'embout comportant une partie d'appui et délimitant un canal interne d'écoulement d'un fluide dans le dispositif de raccord, le corps d'embout étant relié à la première canalisation, la partie d'appui du corps d'embout étant apte à venir en contact étanche avec l'élément de raccord pour le raccordement étanche des première et deuxième canalisations,
- une bague d'embout munie d'une cavité intérieure qui s'étend globalement suivant un axe longitudinal et qui est isolée du canal interne d'écoulement du fluide, ainsi que d'une surface radiale comportant un filetage,
- des moyens de déplacement du corps d'embout, suivant au moins une direction avant parallèle à l'axe longitudinal de la bague d'embout, dans la cavité intérieure de la bague d'embout, et
- un organe intermédiaire comportant un corps qui s'étend suivant un axe longitudinal et qui est muni d'une surface radiale comportant un filetage complémentaire du filetage de la bague d'embout.

Selon l'invention, l'organe intermédiaire comporte également un mécanisme de verrouillage comprenant au moins un coulisseau ou des billes, mobile(s) radialement à l'axe longitudinal entre, d'une part, une position de blocage où le mécanisme de verrouillage est apte à bloquer l'élément de raccord introduit dans l'organe intermédiaire par rapport à l'organe intermédiaire, selon au moins une direction avant parallèle à l'axe longitudinal du corps et, d'autre part, une position de libération où le mécanisme de verrouillage autorise le retrait de l'élément de raccord hors de l'organe intermédiaire, et lorsque l'organe intermédiaire est désaccouplé de la bague d'embout, le mécanisme de verrouillage est apte à se trouver dans sa position de blocage, dans laquelle le coulisseau ou les billes bloque(nt) l'élément de raccord selon au moins la direction avant.

Ainsi, le dispositif de raccord selon l'invention présente plusieurs avantages. Grâce au mécanisme de verrouillage, une connexion/déconnexion entre l'organe intermédiaire et l'élément de raccord peut être réalisée de manière simple et rapide. En particulier, cette connexion/déconnexion peut être réalisée indépendamment du déplacement du corps d'embout par les moyens prévus à cet effet. La liaison entre les filetages de l'organe intermédiaire et de la bague d'embout, qui est plus précisément une liaison par vissage, rattrape les jeux et les tolérances : aucun réglage préliminaire ou en cours de connexion n'est requis, alors qu'un serrage constant au fil des connexions/déconnexions est garanti au sein du dispositif de raccord. En outre, la connexion par verrou entre l'élément de raccord et l'organe intermédiaire permet à cet organe intermédiaire d'être libre en rotation

Ainsi, le dispositif de raccord selon l'invention présente plusieurs avantages. Grâce au mécanisme de verrouillage, une connexion/déconnexion entre l'organe intermédiaire et l'élément de raccord peut être réalisée de manière simple et rapide. En particulier, cette connexion/déconnexion peut être réalisée indépendamment du déplacement du corps d'embout par les moyens prévus à cet effet. La liaison entre les filetages de l'organe intermédiaire et de la bague d'embout, qui est plus précisément une liaison par vissage, rattrape les jeux et les tolérances : aucun réglage préliminaire ou en cours de connexion n'est requis, alors qu'un serrage constant au fil des connexions/déconnexions est garanti au sein du dispositif de raccord. En outre, la connexion par verrou entre l'élément de raccord et l'organe intermédiaire permet à cet organe intermédiaire d'être libre en rotation autour de l'élément de raccord, et donc de ne pas solliciter les canalisations de l'élément de raccord et du corps d'embout en torsion, lors de la connexion entre l'organe intermédiaire et la bague d'embout. Les différentes connexions se complètent avantageusement afin de sécuriser l'élément de raccord dans l'organe intermédiaire. Les moyens de déplacement comprennent de préférence un levier à came, qui démultiplie le serrage manuel et renforce l'étanchéité au sein du raccord, sans outillage auxiliaire. Avantageusement, le contact étanche au sein du dispositif est réalisé entre deux parties métalliques, sans organe élastomère présentant une durée de vie plus réduite. Ainsi, le dispositif selon l'invention est particulièrement adapté pour la transmission de fluides sous hautes pressions et hautes températures entre deux canalisations raccordées de manière étanche.

D'autres caractéristiques avantageuses de l'invention, prises isolément ou en combinaison, sont définies aux revendications 2 à 13.

L'invention a également pour objet un raccord adapté pour transmettre des fluides sous pression. Ce raccord est caractérisé en ce qu'il comprend un dispositif de raccord tel que mentionné ci-dessus et relié à la première canalisation, ainsi qu'un élément de raccord qui est couplé au dispositif de raccord et relié à la deuxième canalisation.

Avantageusement, alors que la partie d'appui du corps d'embout est en contact avec une partie d'appui appartenant à l'élément de raccord, le déplacement du corps d'embout par rapport à l'élément de raccord suivant la direction avant par le biais des moyens de déplacement est apte à réaliser le contact étanche entre la partie d'appui du corps d'embout et la partie d'appui appartenant à l'élément de raccord pour le raccordement étanche des première et deuxième canalisations.

Selon une première variante de raccord, le contact étanche entre la partie d'appui du corps d'embout et la partie d'appui de l'élément de raccord mâle se fait par contact direct des deux surfaces formant les parties d'appui. constitué par un embout de raccord femelle et un organe intermédiaire de connexion, qui sont adaptés pour recevoir l'embout de raccord mâle et présentés dans une configuration désaccouplée ;
- la figure 2 est une coupe partielle analogue à la figure 1, à plus grande échelle, montrant l'organe intermédiaire seul avec son mécanisme de verrouillage dans une configuration déverrouillée ;
- la figure 3 est une coupe partielle analogue à la figure 1, à plus grande échelle, montrant l'embout de raccord mâle et l'organe intermédiaire du dispositif de raccord en cours d'accouplement ;
- la figure 4 est une coupe selon la ligne IV-IV à la figure 3 ;
- la figure 5 est une coupe partielle analogue à la figure 3, montrant l'embout de raccord femelle en cours d'accouplement avec l'organe intermédiaire accouplé à l'embout de raccord mâle ;
- la figure 6 est une coupe selon la ligne VI-VI à la figure 5 ;
- la figure 7 est une coupe partielle analogue à la figure 5, montrant le raccord dans une configuration accouplée ;
- la figure 8 est une coupe selon la ligne VIII-VIII à la figure 7 ;
- la figure 9 est une vue à plus grande échelle du détail IX à la figure 7 ;
- les figures 10 et 11 sont des coupes analogues respectivement aux figures 3 et 7, pour un deuxième mode de réalisation d'un raccord et d'un dispositif de raccord conformes à l'invention, comprenant un organe intermédiaire pourvu d'un mécanisme de verrouillage à billes.

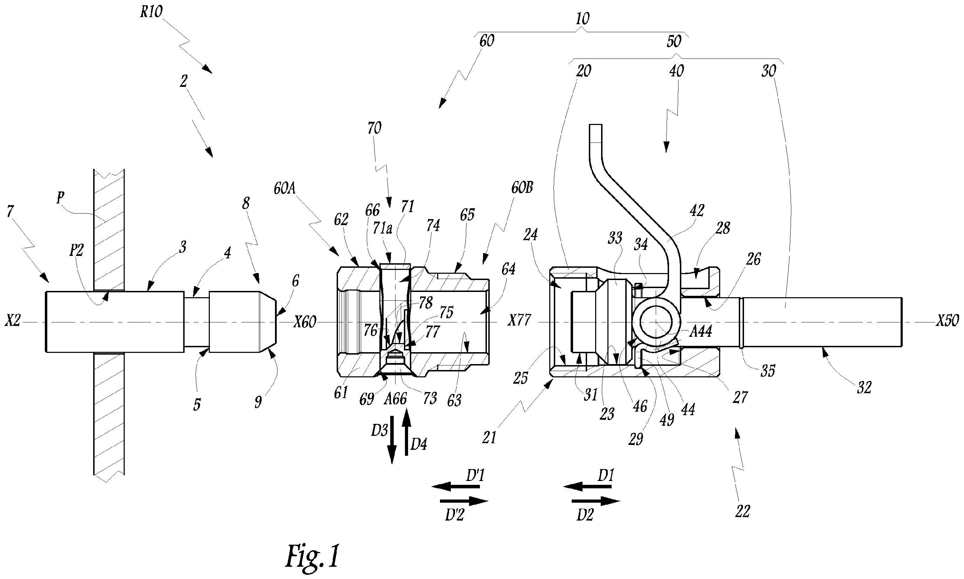

Sur les figures 1 à 9 est représenté un premier mode de réalisation d'un raccord R10 comprenant un dispositif de raccord 10 et un tube 2 conformé comme un élément ou embout de raccord mâle.

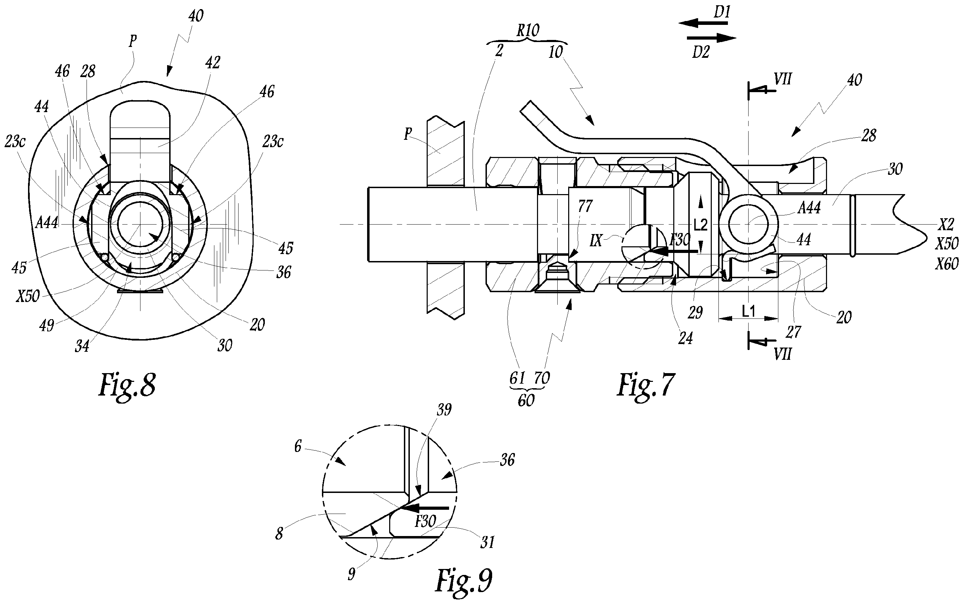

Ce dispositif 10 est conformé comme un élément de raccord femelle, adapté pour recevoir le tube 2. Le dispositif 10 et le tube 2 sont les deux éléments constitutifs du raccord R10, adaptés pour transmettre des fluides gazeux et/ou liquides à hautes températures et hautes pressions lorsque le raccord R10 est dans une configuration accouplée, montrée aux figures 7 à 9. Dans ce cas, le dispositif 10 est relié à une première canalisation, tandis que le tube 2 est couplé au dispositif de raccord 10 et relié à une deuxième canalisation, ces canalisations n'étant pas représentés sur les figures 1 à 9 dans un but de simplification.

Les éléments constitutifs du raccord R10 sont en métal, afin de résister aux hautes températures et hautes pressions.

Le tube 2 comprend une surface externe 3 de révolution qui est centrée sur un axe longitudinal X2 et s'étend entre deux extrémités longitudinales 7 et 8 du tube 2. Le tube 2 est inséré dans un orifice P2 ménagé dans une plaque P. La surface 3 est ajustée dans l'orifice P2, tandis que les extrémités 7 et 8 sont situées de part et d'autre de la plaque P. L'extrémité 7 est reliée à la canalisation non représentée et fixée à une structure également non représentée, tandis que l'extrémité de connexion 8 est prévue pour être couplée au dispositif 10. La surface 3 est munie, dans sa partie disposée du côté de l'extrémité 8 par rapport à la plaque P, d'une gorge annulaire 4 à fond plat centrée sur l'axe X2. La gorge 4 est plus rapprochée de l'extrémité 8 que de l'extrémité 7. Dans sa partie disposée du côté de l'extrémité 8 par rapport à la plaque P, l'encombrement radial du tube 2 est inférieur aux dimensions radiales de l'orifice P2. En l'occurrence la surface externe 3 est de même diamètre de part et d'autre de la gorge 4. La gorge 4 comporte un épaulement 5 qui est situé du côté de l'extrémité 8, est perpendiculaire à l'axe X2 et est orienté vers la plaque P et l'extrémité 7. L'épaulement 5 relie le fond de la gorge 4 à la surface 3. Un canal interne 6 est ménagé dans le tube 2 et débouche aux deux extrémités 7 et 8 du tube 2. L'extrémité 8 comporte une surface externe 9, de forme tronconique, centrée sur l'axe X2. Le diamètre de la surface 9 se réduit en s'éloignant de l'extrémité 7. La surface tronconique 9 constitue une partie d'appui pour une surface tronconique 39 complémentaire appartenant au dispositif 10, comme montré à la figure 9. Une telle étanchéité tronconique par contact métal sur métal est bien adaptée aux fluides à hautes températures et hautes pressions. D'autre part, l'étanchéité tronc de cône sur tronc de cône ne requiert pas de joint, d'où une maintenance allégée.

Le dispositif 10 comprend un embout de raccord 50 et un organe intermédiaire de connexion 60. L'embout 50 s'étend suivant un axe X50 et l'organe 60 s'étend suivant un axe X60. Les axes X50 et X60 sont confondus dans la configuration accouplée du dispositif 10.

L'embout de raccord 50 est constitué par une bague d'embout taraudée 20, un corps d'embout 30 mobile par rapport à la bague 20, ainsi qu'un mécanisme 40 de déplacement du corps 30 par rapport à la bague 20 suivant l'axe X50.

La bague d'embout taraudée 20 présente une forme globalement tubulaire. La bague 20 s'étend suivant l'axe X50 entre une extrémité 21 de connexion à l'organe 60 et une extrémité 22 de coulissement du corps 30 suivant l'axe X50. La bague 20 comprend un premier alésage 23 qui est situé du côté de l'extrémité 21 et un deuxième alésage 26 qui est situé du côté de l'extrémité 22. Ces deux alésages 23 et 26 délimitent une cavité intérieure 24 dite sèche, dans le sens où cette cavité 24 est isolée du canal d'écoulement du fluide en circulation dans le dispositif 10. Cette cavité 24 traverse la bague 20 de part en part selon l'axe longitudinal X50. La bague 20 comprend un profil de prise 25, qui est plus précisément un filetage intérieur, c'est-à-dire un taraudage, ménagé autour de l'axe X50 au niveau de la surface radiale du premier alésage 23 du côté de l'extrémité 21. Le corps 30 peut se translater suivant l'axe X50 par rapport à la bague d'embout 20, en étant guidé dans l'alésage 26. Le diamètre de l'alésage 23 est supérieur au diamètre de l'alésage 26, ces diamètres étant mesurés autour de l'axe X50. Ces deux alésages 23 et 26 sont reliés, dans la cavité 24, par un épaulement 27 perpendiculaire à l'axe X50.

La bague 20 comprend également une ouverture transversale 28 et une rainure annulaire 29 partielle, car débouchante dans l'ouverture radiale 28, qui sont prévus pour recevoir différents éléments constitutifs du mécanisme 40. L'ouverture 28 traverse la bague 20 entre l'alésage 23 et la surface extérieure de la bague 20, radialement à l'axe X50. Cette ouverture 28 est borgne. Comme montré à la figure 8, l'alésage 23 de la bague 20 délimite des logements latéraux 23c ménagés de part et d'autre de l'axe X50 et d'un plan de symétrie de l'ouverture 28, ce plan de symétrie correspondant au plan de la figure 7. La rainure 29 est ménagée dans l'alésage 23 et centrée sur l'axe X50.

On définit pour la bague d'embout 20 une direction avant D1, parallèle à l'axe X50 et dirigée depuis l'extrémité 22 vers l'extrémité 21. On définit également pour la bague d'embout 20 une direction D2, orientée en sens contraire à la direction D1.

Le corps d'embout 30 comprend une partie avant 31 de connexion au tube 2 et une partie arrière 32 reliée à la canalisation non représentée. La partie avant 31 et la partie arrière 32 présentent chacune une forme tubulaire centrée sur l'axe X50 et sont séparées par une collerette 33 en saillie de forme globalement annulaire. La partie avant 31 et la collerette 33 sont logées dans l'alésage 23, tandis que la partie 32 s'étend depuis l'alésage 23 vers l'extérieur et la partie arrière 22 de la bague 20 en traversant l'alésage 26. Autrement dit, le corps 30 pénètre partiellement dans la bague 20, sans être environné de fluide. La collerette 33 comporte un épaulement arrière 34 formant une butée d'appui du mécanisme 40, comme détaillé ci-après. La partie arrière 32 du corps 30 comprend une butée arrière 35 en saillie par rapport à sa surface externe. En outre, le déplacement du corps 30 dans la direction D2 par rapport à la bague d'embout 20 est limité par la présence de la collerette 33 et du mécanisme 40.

Comme montré aux figures 7 à 9, le corps d'embout 30 comprend également un canal interne 36, délimitant partiellement le canal principal d'écoulement de fluide dans le dispositif de raccord 10. Le canal 36 s'étend à travers le corps 30 suivant l'axe longitudinal X50 et débouche au niveau de la partie avant 31 et de la partie arrière 32. La surface tronconique 39 est ménagée à l'embouchure du canal 36, à l'intérieur de la partie avant 31 et du côté de l'extrémité avant de la partie 31. La surface tronconique 39 est évasée en direction de l'extrémité avant de la partie 31, formant ainsi une partie d'appui complémentaire de la surface 9 du tube 2.

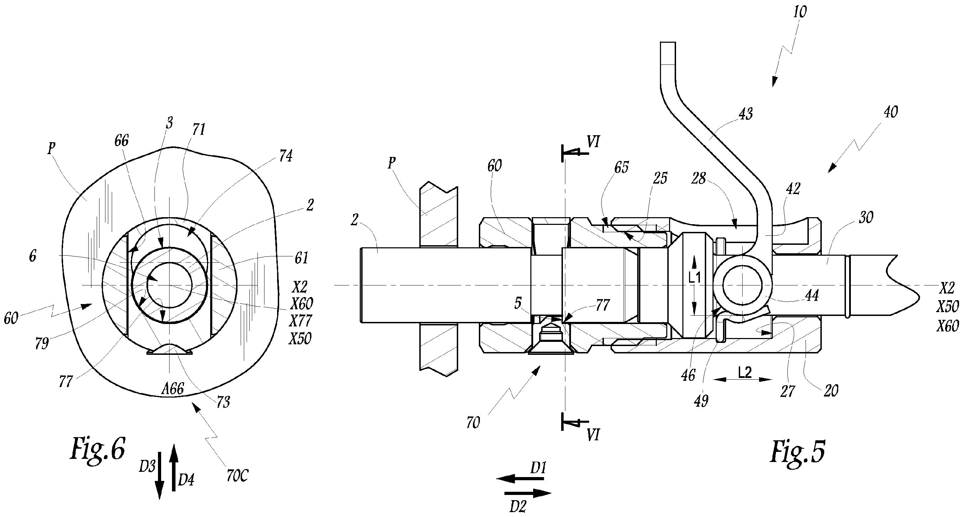

Le mécanisme 40 de déplacement du corps d'embout 30 comprend un levier à came 42 monté en chape autour du corps 30. Le levier 42 comprend un bras de manoeuvre 43, qui s'étend à travers l'ouverture 28 prévue à cet effet dans la bague 20 et est actionnable depuis l'extérieur de la bague d'embout 20 par un opérateur. Le levier 42 comprend une came 44, munie de parties latérales 45 qui sont en partie logées dans les logements latéraux 23c de la bague 20, comme montré à la figure 8. Chaque partie latérale 45 comporte une surface extérieure 46, qui est globalement ovale en section dans un plan parallèle au plan de la figure 5. Les deux surfaces 46 sont symétriques par rapport au plan de symétrie du levier 42 correspondant au plan des figures 1, 5 et 7. Chaque surface 46 définit une largeur de verrouillage L1 et une largeur de déverrouillage L2, comme montré aux figures 5 et 7, avec la largueur L1 qui est supérieure à la largeur L2. Dans cet exemple de réalisation, les longueurs L1 et L2 sont définies selon des directions perpendiculaires entre elles. A titre d'exemple non limitatif, la différence dimensionnelle entre la largeur de verrouillage L1 et la largeur de déverrouillage L2 de la came 44 est de l'ordre de 0,05 millimètres, pour une largeur L1 qui est de l'ordre de 4 millimètres. Plus généralement, la différence dimensionnelle entre les largeurs L1 et L2 est de l'ordre de 0,5 % à 5 %, de préférence de l'ordre de 1 %. La came 44 est susceptible de pivoter autour d'un axe A44, perpendiculaire au plan de symétrie du levier 42, lorsque l'opérateur actionne le levier 42.

Lorsque le dispositif 10 est en configuration désaccouplée, le mécanisme 40 est dans une position dite non verrouillée. Le bras 43 s'étend à travers l'ouverture 28, sensiblement perpendiculairement à l'axe X50, comme montré aux figures 1 et 5. En cours d'accouplement, le levier 42 peut être rabattu par l'opérateur vers une position de verrouillage, avec le bras 43 qui est positionné sensiblement parallèlement à l'axe X50 et qui s'étend vers l'avant de l'embout de raccord 50, comme montré aux figures 7 et 8. La came 44 repousse alors le corps 30, comme détaillé ci-après.

Grâce à l'action du mécanisme 40 en cours d'accouplement, le corps 30 est donc mobile dans la bague 20 entre, d'une part, une position reculée au contact de la came 44 suivant la direction D2 et, d'autre part, une position avancée vers l'extrémité 21 de la bague 20 sous la poussée de la came 44 suivant la direction D1. Lorsque le dispositif 10 est accouplé, avec l'organe intermédiaire 60 qui est vissé sur l'embout 50, la partie 31 du corps 30 pénètre dans l'organe 60. Lorsque le dispositif 10 est désassemblé, le déplacement du corps 30 dans la direction D1 est limité par la butée 35 qui vient en appui contre la bague d'embout 20. Le corps 30 est représenté en position reculée au contact de la came 44 sur la figure 1, mais pourrait en alternative être représenté en position avancée vers la partie avant 31, avec la butée 35 qui limite son déplacement. En position reculée du corps 30 dans la bague d'embout 20, la collerette 33 du corps 30 est au contact de la came 44, elle-même maintenue en position de contact dans la bague 20, avec les parties latérales 45 qui appuient sur l'épaulement 27 dans les logements latéraux 23c.

Le mécanisme 40 comprend également un ressort frein 49, adapté pour maintenir par friction le levier à came 42 en position angulaire de verrouillage et de déverrouillage lorsque l'opérateur n'agit pas sur le levier 42. Le ressort frein 49, d'une part, est en partie logé dans la rainure 29 de la bague 20 et, d'autre part, s'étend en partie contre les surfaces extérieures 46 de la came 44, du côté opposé radialement à l'ouverture 28 et au bras 43 par rapport aux axes X50 et A44.

L'organe intermédiaire 60 comprend un corps tubulaire 61 et un mécanisme de verrouillage à action rapide ou verrou 70. Le corps tubulaire 61 comprend une surface radiale externe 62 globalement cylindrique, ainsi qu'un alésage interne 63, qui sont centrés sur l'axe X60. L'alésage 63 délimite une cavité intérieure 64 dite sèche, dans le sens où cette cavité 64 est isolée du canal d'écoulement du fluide en circulation dans le dispositif 10, comme la cavité 24 de la bague 20. Une rainure transversale 66 traverse le corps 61 de part en part, suivant un axe A66 perpendiculaire à l'axe X60, en débouchant dans la cavité 64 et au niveau de la surface 62. La rainure 66 est prévue pour recevoir le verrou 70, comme détaillé ci-après. La surface 62 comporte un profil de prise 65, qui est plus précisément un filetage périphérique externe, complémentaire du taraudage 25 et ménagé autour de l'axe X60. Le filetage 65 est situé, suivant l'axe X60 et par rapport à la rainure 66, sur un côté 60B de l'organe 60. Lors de l'accouplement entre l'embout 50 et l'organe 60, le côté 60B et le filetage 65 sont orientés vers l'embout 50. Le filetage 65 est ainsi susceptible de venir en prise avec le taraudage 25 de la bague taraudée 20, comme montré en particulier à la figure 5. L'organe 60 comprend également un côté 60A, opposé au côté 60B par rapport à la rainure 66 et suivant l'axe X60. Le tube 2 peut être introduit dans la cavité 64 par ce côté 60A.

On définit pour l'organe intermédiaire de connexion 60 une direction avant D'1 orientée selon l'axe X60 depuis le côté 60B vers le côté 60A. Une direction D'2 est également définie pour l'organe intermédiaire de connexion 60 selon un sens opposé à la direction D'1. Lorsque l'organe intermédiaire de connexion 60 et l'embout de raccord 50 sont en cours d'accouplement ou accouplés, les directions D'1 et D'2 pour l'organe intermédiaire de connexion 60 sont respectivement identiques aux directions D1 et D2 pour la bague d'embout 20.

Le verrou 70 comprend un coulisseau 71 rigide de section complémentaire à la section de la rainure 66, aux jeux de fonctionnement près, muni de deux surfaces latérales 72. Les surfaces 72 sont situées de part et d'autre de l'axe X60 et de l'axe A66. L'opérateur peut actionner le coulisseau 71 en appuyant sur une surface extérieure 71 a de ce coulisseau 71. Une vis 73 est fixée sur un côté extérieur radial 70C opposé à la surface 71a du coulisseau 71, avec un axe de vis qui s'étend sensiblement selon l'axe A66. Le coulisseau 71 est mobile suivant l'axe A66, en liaison glissière dans la rainure 66 de l'organe 60, au niveau des surfaces 72. Plus précisément, le coulisseau 71 est mobile dans la rainure 66, d'une part, suivant une direction de dégagement D3 orientée selon l'axe A66 en direction du côté 70C, notamment sous l'action de l'opérateur sur la surface 71 a jusqu'à une butée non représentée et, d'autre part, suivant une direction d'engagement D4 opposée à la direction D3, sous l'action d'un ressort de rappel, non représenté dans un but de simplification. Le ressort de rappel intégré au verrou 70 tend à ramener le coulisseau 71 en position de butée, montrée à la figure 1, suivant la direction D4 d'engagement ou de rappel. La rainure 66 est munie d'une surface conique 69, qui constitue la butée du verrou 70 dans la direction D4 par butée de la vis 73 contre la surface conique 69.

Les directions D3 et D4 sont radiales à l'axe X60, c'est-à-dire perpendiculaires aux directions D'1 et D'2.

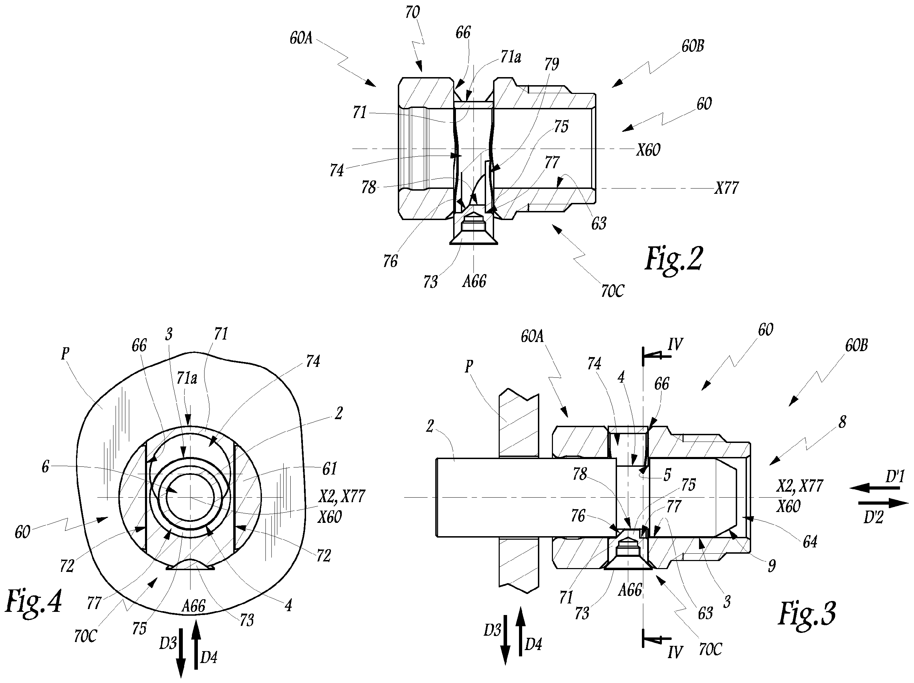

Un logement 74 est ménagé dans le coulisseau 71 du verrou 70, débouchant de part et d'autre du coulisseau 71 parallèlement à l'axe X60. Le logement 74 est globalement oblong suivant la direction D4. Du côté 70C, le logement 74 est pourvu d'un décrochement radial 75 orienté vers l'axe X60. Plus précisément, le décrochement 75 comporte une surface inclinée 76, un lamage de sécurité 77 et une dent 78. La surface 76 est tournée vers le côté 60A et l'axe X60, tandis que le lamage 77 est disposé du côté 60B, avec la dent 78 disposée selon l'axe X60 entre la surface 76 et le lamage 77. Du fait de la géométrie oblongue du logement 74, le lamage 77 est en fait un lamage cylindrique partiel, centré sur un axe X77 parallèle à l'axe X60, dont le diamètre externe est sensiblement équivalent au diamètre de la surface cylindrique externe 3 du tube 2. Ce lamage 77 couvre un secteur angulaire 79 strictement supérieur à 180°, de préférence supérieur à 200°, en l'occurrence égal à 210° dans le mode de réalisation des figures 1 à 9. Le secteur angulaire 79 couvert par le lamage 77 est disposé du côté 70C et est défini autour de l'axe central X77 du lamage 77. L'axe X77 est, d'une part, aligné avec l'axe X60 dans la position de blocage du tube 2 introduit dans l'organe 60, comme montré aux figures 3 et 4 et, d'autre part, décalé du côté 70C par rapport à l'axe X60 dans la position de libération du tube 2 hors de l'organe intermédiaire 60, comme montré à la figure 2.

En pratique, le tube 2 est inséré dans la cavité 64 et à travers le logement 74 de l'organe 60, en vue de sa connexion à l'embout 50. Le verrou 70 permet alors un verrouillage rapide du tube 2 dans l'organe 60, comme détaillé ci-après. Plus précisément, le verrou 70 permet la réalisation d'un blocage du tube 2 en translation suivant la direction D'1 lorsque le tube 2 et l'organe intermédiaire de connexion 60 sont accouplés. Dans ce cas, le verrou 70 se loge partiellement dans la gorge 4 avec le décrochement 75 qui vient dans la gorge annulaire 4 au contact de la surface externe 3 du tube 2. L'épaulement 5 du tube 2 vient en butée contre la dent 78 au niveau du fond du lamage de sécurité 77. Le verrouillage est dit rapide, dans la mesure où il est réalisé sans opération de vissage entre le tube 2 et l'organe 60. En outre, lorsque le tube 2 est bloqué dans l'organe 60, un mouvement de rotation de l'organe 60 autour du tube 2 est possible, notamment pour visser le filetage 65 dans le taraudage 25.

Le fonctionnement complet du raccord R10 et du dispositif 10 est détaillé ci-après.

Initialement, le tube 2, l'embout de raccord 50 et l'organe intermédiaire 60 sont désaccouplés, comme montré à la figure 1.

Lors d'une première étape de connexion montrée aux figures 2 à 4, l'opérateur met en oeuvre la connexion rapide à verrou 70 pour connecter l'organe intermédiaire 60 au tube 2. L'extrémité 8 du tube 2 est introduite dans la cavité 64 par le côté avant 60A. La surface 3 est sensiblement ajustée dans l'alésage 63, tandis que les axes X2 et X60 sont sensiblement alignés. La surface 3 vient en appui contre la surface inclinée 76, repoussant transversalement le coulisseau 71 du verrou 70 suivant la direction D3, à l'encontre du ressort de rappel. Lorsque le décrochement radial 75 se trouve en regard de la gorge 4 et que le tube 2 a été suffisamment inséré pour que l'épaulement 5 de la gorge 4 soit au-delà du lamage 77 suivant la direction D'2, le coulisseau 71 est repoussé élastiquement dans la direction D4 par le ressort du verrou 70, avec la dent 78 qui s'engage dans la gorge 4, comme montré aux figures 3 et 4. A ce stade, l'épaulement 5 n'est donc pas en butée contre le lamage 77.

En outre, un mouvement du tube 2 par rapport à l'organe 60 est, d'une part, possible en rotation autour de l'axe X2 et, d'autre part, bloqué en translation suivant la direction D'1, dès lors que l'épaulement 5 vient en butée contre la dent 78 dans le lamage 77.

La connexion entre le tube 2 et l'organe intermédiaire 60 est dite automatique, dans la mesure où elle intervient par le seul mouvement d'introduction du tube 2 dans l'organe intermédiaire 60.

Lors d'une deuxième étape de connexion montrée aux figures 5 et 6, l'opérateur engage le taraudage 25 de la bague d'embout 20 dans le filetage périphérique externe 65 de l'organe 60, puis visse cet organe 60 jusqu'à mettre en contact direct la surface tronconique 9 du tube 2 avec la surface tronconique 39 du corps d'embout 30. Dans cette configuration en cours d'accouplement, le corps 61 est alors logé par son côté 60B dans la cavité 24, la partie avant 31 du corps 30 est sensiblement ajustée dans l'alésage 63, tandis que les axes X2, X50 et X60 sont sensiblement alignés. Le vissage entre les profils de prise 25 et 65 se poursuit tant que, d'une part suivant la direction D1, le tube 2 n'est pas en butée dans le lamage de sécurité 77 du verrou 70 et, d'autre part suivant la direction D2, le corps 30 n'est pas au contact de la bague d'embout 20 via le levier à came 42. Plus précisément, l'épaulement 34 de la collerette 33 est repoussé contre les surfaces 46 de la came 44 tandis que dans le même temps, les surfaces 46 de la came 44 sont repoussées en appui contre l'épaulement 27, dans les logements latéraux 23c ménagés dans la bague 20. En position déverrouillée du levier 42, la came 44 est donc intercalée selon l'axe longitudinal X50 entre le corps d'embout 30 et la bague d'embout 20, solidarisée longitudinalement avec le tube 2, au niveau de sa largeur de déverrouillage L2. Du fait de l'engagement du tube 2 dans le lamage 77, le mouvement du verrou dans la direction D4 pour le dégagement du verrou 70 et donc le retrait du tube 2 hors de l'organe 60 est désormais empêché par la géométrie du lamage 77 et de son secteur angulaire 79, le tube 2 constituant une butée au déplacement du verrou 70 selon la direction D4.

Ainsi, la liaison vissée entre la bague 20 et l'organe 60 permet de rattraper les jeux et tolérances de fabrication axiaux des éléments constitutifs du raccord R10 et de sécuriser l'accouplement entre le tube 2 et l'organe intermédiaire de connexion 60.

Lors d'une troisième étape de connexion montrée aux figures 7 à 9, l'opérateur actionne le mécanisme 40. Plus précisément, l'opérateur fait pivoter le bras 43 du levier 42 en direction de l'extrémité avant 21 de la bague 20, jusqu'à ce que ce bras 43 soit sensiblement parallèle à l'axe X50, dans sa position de verrouillage. Les surfaces 46 de la came 44 ont pivoté en appui contre l'épaulement 27, tandis que les surfaces 46 ont glissé contre l'épaulement 34 de la collerette 33. La came 44 s'intercale alors selon l'axe longitudinal X50 entre le corps d'embout 30 et la bague d'embout 20 au niveau de la largeur de verrouillage L1, repoussant ainsi la collerette 33 dans la direction D1 par rapport à la bague d'embout 20. Autrement dit, après assemblage et rattrapage des jeux axiaux, l'actionnement du levier 42 provoque un déplacement du corps d'embout 30 par rapport à la bague d'embout 20 suivant la direction D1 vers le tube 2, ce déplacement étant égal à la différence entre les largeurs L1 et L2, de préférence de l'ordre de 5 centièmes de millimètres. Lorsque le corps 30 se translate par rapport au tube 2, la surface 39 exerce des efforts F30 dirigés suivant la direction D1 sur la surface 9. Les efforts F30 sont répartis radialement autour des axes X2 et X50 confondus, à l'interface entre les surfaces 9 et 39. Ces efforts F30 garantissent un serrage optimal des surfaces tronconiques 9 et 39 l'une contre l'autre, créant une étanchéité entre le tube 2 et le corps d'embout 30. Dans cette configuration accouplée, la butée 35 n'est pas en contact avec la bague 20 pour ne pas gêner la translation du corps 30.

A ce stade, le raccord R10 et le dispositif 10 sont en configuration accouplée. Le fluide peut circuler à travers le raccord R10, plus précisément à travers le corps d'embout 30 et le tube 2, dans les canaux 36 et 6. Le levier à came 42 est maintenu en position de verrouillage des pièces par le ressort frein 49.

Lors d'une étape de déconnexion, l'opérateur ramène le levier 42 en position relevée de déverrouillage, avec le bras 43 qui s'étend sensiblement radialement à l'axe X50 et la came 44 qui est intercalée selon l'axe longitudinal X50 entre le corps d'embout et la bague d'embout au niveau de sa largeur de déverrouillage L2. Les efforts F30 se relâchent. Puis l'opérateur dévisse l'organe intermédiaire 60 pour le détacher de l'embout de raccord 50.

Si besoin, pour démonter le tube 2 à travers la plaque P, ce tube 2 doit être déconnecté de l'organe intermédiaire 60. A cet effet, l'opérateur déplace le tube 2 selon la direction D2 par rapport à l'organe intermédiaire 60, de manière que l'épaulement 5 du tube 2 sorte du lamage de sécurité 77. Lorsque l'opérateur appuie sur la surface 71 a, le coulisseau 71 coulisse dans la direction D3, à l'encontre de l'effort élastique du ressort du verrou 70 et son décrochement radial 75 s'escamote hors de la gorge 4, comme montré à la figure 2 où seul l'organe 60 est représenté dans un but de simplification. Le tube 2 est alors libéré par le verrou 70 et peut coulisser dans le logement 74 sans être bloqué par le verrou 70, puis être extrait hors de l'organe 60. Le tube 2 peut ensuite être retiré à travers l'orifice P2 de la plaque P. Dès que l'opérateur relâche son action sur le verrou 70, le verrou 70 est rappelé élastiquement dans la direction D4 et prêt pour une nouvelle connexion d'un élément du type tube 2.

Selon l'invention, le verrou 70 est donc mobile entre, d'une part, une position de blocage de l'élément de raccord 2 introduit dans l'organe intermédiaire 60, selon au moins la direction avant D1, par rapport au corps 61 de l'organe intermédiaire 60 et, d'autre part, une position de libération de l'élément de raccord 2, qui peut alors être retiré selon la direction D1 hors de l'organe intermédiaire 60.

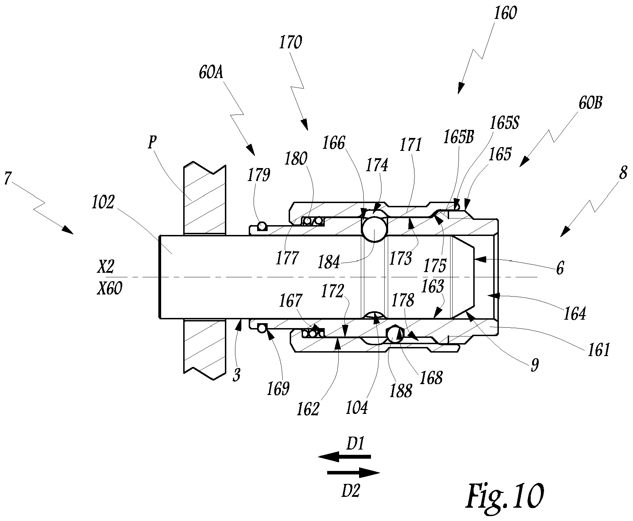

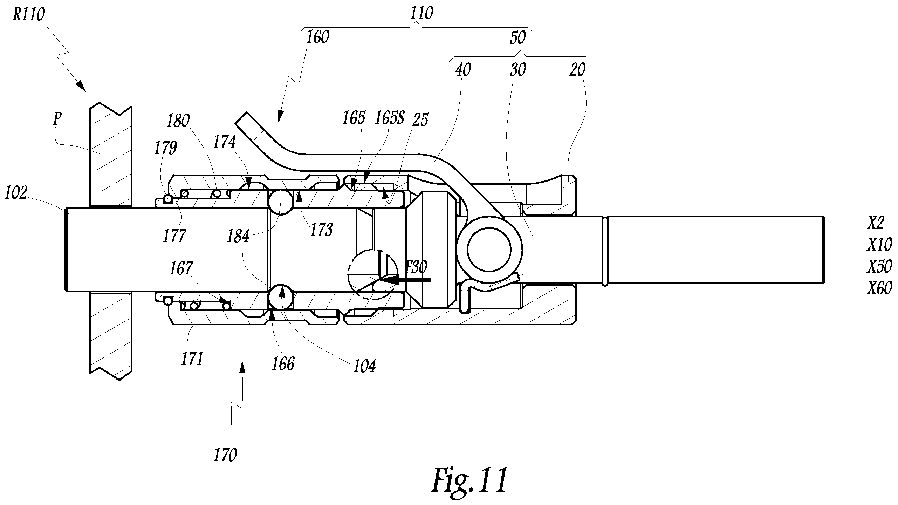

Sur les figures 10 et 11 est représenté un deuxième mode de réalisation d'un raccord R110 et d'un dispositif de raccord 110 selon l'invention.

Certains éléments constitutifs du raccord R110 sont identiques aux éléments constitutifs du raccord R10 du premier mode de réalisation, décrit plus haut, et portent les mêmes références.

D'autres éléments constitutifs du raccord R110 présentent un fonctionnement similaire, mais une structure différente, en comparaison avec le premier mode de réalisation, et portent des références augmentées de 100. Il s'agit du tube 102, de la gorge 104, de l'organe intermédiaire 160, du corps tubulaire 161, d'une surface externe 162, d'un alésage interne 163, d'une cavité intérieure 164, d'un filetage 165, de plusieurs rainures transversales 166 réparties radialement autour de l'axe 60, ainsi que d'un mécanisme de verrouillage rapide 170.

Le tube 102 est similaire au tube 2, à l'exception de la gorge 104. Cette gorge 104 présente un profil annulaire à fond concave arrondi centré sur l'axe X2.

Le mécanisme 170 équipant l'organe intermédiaire 160 est un verrou à billes. Plus précisément, le verrou 170 comporte des billes de verrouillage 184 rigides disposées dans les rainures radiales 166 et susceptibles de venir se loger partiellement dans la gorge 104, au contact d'une surface externe du tube 102. Ainsi, les billes 184 peuvent empêcher tout déplacement relatif en translation entre le tube 102 et le corps 161 de l'organe 160, tout en permettant une rotation de l'organe 160 autour du tube 102. Sur l'exemple des figures 10 et 11, les billes 184 et les rainures 166 sont au nombre de six. Sur la figure 10, la coupe correspond à un plan de coupe différent de part et d'autre de l'axe X60. En alternative, le nombre de billes 184 et de rainures 166 peut être différent de six.

Le verrou 170 comprend une bague de verrouillage 171 de forme globalement tubulaire. La bague 171 comporte un alésage 172 en liaison glissière, suivant les directions D'1 ou D'2, sur la surface externe 162 du corps 161. L'alésage 172 comporte une partie 173 susceptible d'agir sur les billes 184 suivant une direction d'engagement orientée vers l'axe X60, afin de maintenir ces billes 184 dans la gorge 104. L'alésage 172 comporte également une gorge interne 174 qui, lorsque positionnée en regard des rainures 166, accueille les billes 184 pour les extraire de la gorge 104. L'alésage 172 comporte également une surface 175, orientée du côté 60B, d'appui contre une butée longitudinale 165B ménagée du côté 60A du filetage 165.

La bague 171 comprend également un décrochement 177, orienté radialement vers l'axe X60 par rapport à l'alésage 172 et qui constitue l'extrémité de la bague 171 du côté 60A. Un ressort 180 est positionné autour de l'axe X60, entre le corps 161 et la bague 171. Plus précisément, le ressort 180 est disposé entre le décrochement 177 et un épaulement 167 ménagé dans le corps 161 et tourné du côté 60A. Le ressort 180 tend à repousser la bague 171 dans une position où la partie 173 recouvre les rainures 166.

La bague 171 comprend également des rainures longitudinales 178, qui débouchent au niveau de l'alésage 172 en regard de logements 168 ménagés dans le corps 161. Les logements 168 et les rainures 178 reçoivent des billes 188, prévues pour la solidarisation en rotation de la bague 171 avec le corps 161. En outre, un joint annulaire 179 est logé dans une rainure annulaire 169 ménagée au niveau de la surface 162 du corps 161 du côté 60A. Ainsi, lors des déplacements de la bague 171 en coulissement longitudinal autour du corps 161, le décrochement 177 vient en butée suivant la direction D'1 contre le joint 179, ou la surface 175 vient en butée suivant la direction D'2 contre la butée 165B.

Le fonctionnement du raccord R110 et du dispositif 110 est détaillé ci-après. Ce fonctionnement est comparable à celui du raccord R10 et du dispositif 10, à l'exception la première étape de connexion.

Comme montré à la figure 10, lors de cette première étape de connexion, l'opérateur met en oeuvre la connexion rapide à verrou à billes 170 pour bloquer le tube 102 dans l'organe intermédiaire 160. L'opérateur repousse la bague 171 contre la butée 165B suivant la direction D'2, en s'opposant à l'action du ressort 180. L'extrémité 8 du tube 102 est introduite dans la cavité 164 par le côté avant 60A, suivant la direction D'2. La gorge 174 se trouve alors en regard des rainures 166, tandis que la bague 171 recouvre partiellement le filetage 165 de l'organe 160 sur une surface de recouvrement 165S. Les billes 184 roulent sur la surface 3, tandis que les billes 188 logées dans les logements 168 roulent dans les rainures 178. La surface tronconique 9 repousse les billes 184 dans les rainures 166 et la gorge 174, suivant une direction de dégagement qui s'éloigne de l'axe X60. Le déplacement du tube 102 suivant la direction D'2 se poursuit, jusqu'à ce que les billes 184 soient positionnées en regard de la gorge 104.

A ce stade, l'opérateur relâche la bague 171, qui est repoussée par le ressort 180 suivant la direction D'1. Les billes 184 viennent alors se loger dans cette gorge 104, comme montré à la figure 10. La partie 173 de l'alésage 172 vient se positionner en regard des rainures 166, de manière à empêcher tout déplacement radial vers l'extérieur des billes 184, comme montré à la figure 11. Un mouvement du tube 102 par rapport à l'organe 160 est alors, d'une part, possible en rotation autour de l'axe X2 et, d'autre part, empêché en translation suivant la direction D'1 et suivant la direction D'2, avec les billes 184 maintenues dans les rainures transversales 166 et la gorge 104 par la bague 171. A la différence du premier mode de réalisation décrit plus haut, le verrou 170 empêche tout déplacement en translation suivant les deux directions D'1 et D'2.

Les deuxième et troisième étapes de connexion, permettant d'amener le raccord R110 et le dispositif 110 en configuration accouplée, sont identiques à celles décrites plus haut pour le raccord R10 et le dispositif 10. Dès lors que l'organe 160 et l'embout de raccord 150 sont assemblés et que les jeux axiaux sont rattrapés, le filetage 25 recouvre au moins partiellement la surface 165S et, par conséquent, la bague 171 ne peut pas être amenée en position de déverrouillage des billes 184. Le tube 102 et l'organe intermédiaire de connexion 160 ne peuvent alors plus être désaccouplés.

Lors d'une étape de déconnexion, l'opérateur ramène le levier 42 en position déverrouillée. Puis l'opérateur dévisse l'organe intermédiaire 160 pour le détacher de l'embout de raccord 50.

Si besoin, pour démonter le tube 102 à travers la plaque P, ce tube 2 doit être déconnecté de l'organe intermédiaire 160. La surface de recouvrement 165S étant dégagée, l'opérateur peut repousser la bague 171 suivant la direction D'2, contre la butée 165B. La surface 174 se trouve alors radialement en regard des billes 184 pour leur libération hors de la gorge 104 et pour la libération de l'élément mâle 102 qui peut alors être retiré hors de l'organe intermédiaire 160. L'opérateur peut ainsi exercer un effort de retrait sur le tube 102 de la cavité 164 de l'organe 160, ce qui dégage les billes 184 hors de la gorge 104 selon un mouvement de dégagement transversal à l'axe X60 et libère l'élément mâle qui peut alors être retiré hors de l'organe intermédiaire 160, puis relâcher la bague 171.

Les éléments constitutifs du raccord R10 ou R110 et du dispositif de raccord 10 ou 110 peuvent être conformés de manière différente sans sortir du cadre de l'invention. En pratique, ces éléments constitutifs sont conçus pour assurer une connexion étanche fiable et pratique à réaliser, ainsi que pour résister à plusieurs montages et démontages du raccord.

En variante non représentée, le mécanisme de verrouillage rapide peut être configuré différemment des mécanismes 70 et 170, tout en permettant de réaliser la liaison entre l'organe intermédiaire et le tube de manière simple et rapide. L'engagement d'un mécanisme de verrouillage dans une gorge du tube garantit qu'après verrouillage, l'organe intermédiaire peut tourner par rapport au tube et que son vissage dans la bague d'embout ne sollicite pas en torsion la canalisation reliée au tube. En outre, le mécanisme de verrouillage est adapté pour être amené dans sa position de blocage alors que l'organe intermédiaire est désaccouplé de la bague d'embout 20.

Les variantes ci-après sont décrites en référence au dispositif 10, dans un but de simplification, étant entendu qu'elles s'appliquent également au dispositif 110.

En variante non représentée, les parties d'appui 9 et 39 entre le tube 2 et le corps d'embout 30 peuvent être conformées différemment de l'exemple des figures 1 à 11. De préférence, les parties 9 et 39 comprennent au moins une surface tronconique pour contact étanche. Par exemple, les parties 9 et 39 comprennent, soit l'une soit l'autre, une surface tronconique et une surface sphérique de contact étanche. Selon un autre exemple, les parties 9 et 39 peuvent être configurées avec le tube 2 qui est femelle et reçoit un corps d'embout mâle 30. De préférence, lorsque le contact étanche des parties 9 et 39 est du type tronc de cône / sphère, la pièce externe femelle est munie d'une extrémité tronconique et la pièce interne mâle est munie d'une extrémité sphérique.

Selon une autre variante non représentée, l'étanchéité au sein du raccord 10 est assurée par un joint métallique. Plus précisément, le contact étanche entre le tube 2 et le corps d'embout 30 est assuré par l'intermédiaire d'un joint métallique, que le rapprochement des pièces par actionnement du levier 42 vient comprimer entre les parties d'appui 9 et 39 du tube 2 et du corps d'embout 30 pour étanchéifier la liaison. Dans ce cas, les parties d'appui 9 et 39 du tube 2 et du corps d'embout 30 ne sont pas nécessairement des surfaces tronconiques ou sphériques.

Selon une autre variante non représentée, la bague d'embout 20 comprend un profil de prise mâle, par exemple un filetage, tandis que l'organe intermédiaire 60 comprend un profil de prise femelle, par exemple un taraudage.

Selon une autre variante non représentée, le mécanisme 40 peut être conformé de manière différente, adaptée à la présente application. Par exemple, la came 44 et ses surfaces extérieures 46 peuvent être conformées différemment de ce qui est représenté sur les figures 1 à 11. Selon un autre exemple, le levier 42 n'est pas monobloc. De préférence, le mécanisme 40 comprend une partie tournante qui génère un déplacement longitudinal du corps 30, en particulier suivant la direction avant D1.

Avantageusement, le mécanisme de déplacement 40 provoque le rapprochement des deux parties d'appui 9 et 39, avec la partie d'appui 9 déjà en butée contre le corps d'embout 30, de manière à réaliser le contact étanche au sein du dispositif pour assurer le raccordement étanche des deux canalisations.

Selon une autre variante non représentée, le corps d'embout 30 n'est pas conformé comme un corps tubulaire monobloc, mais est constitué de plusieurs pièces assemblées entre elles de manière étanche.

Selon une autre variante non représentée, un système de soupape peut être disposé à l'intérieur du tube 2 et/ou à l'intérieur du canal principal d'écoulement défini par le corps d'embout 30. Dans tous les cas, la bague 20 comprend une cavité intérieure sèche 24, traversante, isolée de la veine fluide, c'est-à-dire dans laquelle aucun fluide ne circule directement.

Quel que soit le mode de réalisation, aucun fluide ne s'écoule dans la cavité intérieure sèche 24 de la bague 20 et sur la surface extérieure du corps 30. Autrement dit, le corps 30 est différent d'une soupape.

Dans la mesure où, à partir de la configuration accouplée du raccord R10, le tube 2 ne peut être dissocié de l'embout de raccord 50 sans préalablement désassembler l'embout de raccord 50 et l'organe intermédiaire 60, on garantit l'étanchéité d'un élément du type tube 2 et du corps d'embout 30 lors d'une connexion ultérieure.

## Revendications

1. Dispositif de raccord (10; 110), adapté pour transmettre des fluides sous pression, ce dispositif de raccord (10 ; 110) étant relié à une première canalisation et configuré pour s'accoupler avec un élément de raccord (2 ; 102) relié à une deuxième canalisation, avec une première pièce (2 ; 102) parmi le dispositif et l'élément de raccord qui est configurée comme un élément mâle et une deuxième pièce (10 ; 210) parmi le dispositif et l'élément de raccord qui est configurée comme un élément femelle, le dispositif de raccord (10 ; 110) comprenant :
- un corps d'embout (30) comportant une partie d'appui (39) et délimitant un canal interne d'écoulement (36) d'un fluide dans le dispositif de raccord (10 ; 110), le corps d'embout (30) étant relié à la première canalisation, la partie d'appui (39) du corps d'embout (30) étant apte à venir en contact étanche avec l'élément de raccord (2 ; 102) pour le raccordement étanche des première et deuxième canalisations,
- une bague d'embout (20) munie d'une cavité intérieure (24) qui s'étend globalement suivant un axe longitudinal (X50) et qui est isolée du canal interne d'écoulement (36) du fluide, ainsi que d'une surface radiale (23) comportant un filetage (25),
- des moyens (40) de déplacement du corps d'embout (30), suivant au moins une direction avant (D1) parallèle à l'axe longitudinal (X50) de la bague d'embout (20), dans la cavité intérieure (24) de la bague d'embout (20), et
- un organe intermédiaire (60; 160) comportant un corps (61 ; 161) qui s'étend suivant un axe longitudinal (X60) et qui est muni d'une surface radiale (62) comportant un filetage (65; 165) complémentaire du filetage (25) de la bague d'embout (20),
**caractérisé en ce que** l'organe intermédiaire (60; 160) comporte également un mécanisme de verrouillage (70 ; 170) comprenant au moins un coulisseau (71) ou des billes (184), mobile(s) radialement à l'axe longitudinal (X50) entre, d'une part, une position de blocage où le mécanisme de verrouillage est apte à bloquer l'élément de raccord (2 ; 102) introduit dans l'organe intermédiaire (60 ; 160) par rapport à l'organe intermédiaire (60 ; 160), selon au moins une direction avant (D'1) parallèle à l'axe longitudinal (X60) du corps (61) et, d'autre part, une position de libération où le mécanisme de verrouillage (70 ;170) autorise le retrait de l'élément de raccord (2 ;102) hors de l'organe intermédiaire (60 ;160),
et **en ce que** lorsque l'organe intermédiaire (60 ; 160) est désaccouplé de la bague d'embout (20), le mécanisme de verrouillage (70 ; 170) est apte à se trouver dans sa position de blocage, dans laquelle le coulisseau (71) ou les billes (184) bloque(nt) l'élément de raccord (2 ; 102) selon au moins la direction avant (D'1).

2. Dispositif de raccord (10; 110) selon la revendication 1, **caractérisé en ce que** le mécanisme de verrouillage (70 ; 170) est apte à venir se loger au moins partiellement dans une gorge (4 ; 104) ménagée dans l'élément de raccord (2 ; 102).

3. Dispositif de raccord (10 ; 110) selon l'une des revendications précédentes, **caractérisé en ce que** les moyens (40) de déplacement du corps d'embout (30) comprennent un levier (42) et une came (44) pivotante dans la bague d'embout (20).

4. Dispositif de raccord (10 ; 110) selon la revendication 3, **caractérisé en ce que** le levier (42) est monté en chape autour du corps d'embout (30), la came (44) étant intercalée selon l'axe longitudinal (X50) de la bague d'embout (20) entre un épaulement (34) du corps d'embout (30) et un épaulement (27) de la bague d'embout (20).

5. Dispositif de raccord (10 ; 110) selon la revendication 3 ou 4, **caractérisé en ce que** la came (44) comporte au moins une surface extérieure (46), avec une largeur de verrouillage (L1) et une largeur de déverrouillage (L2) qui est inférieure à la largeur de verrouillage (L1), un écart entre la largeur de verrouillage (L1) et la largeur de déverrouillage (L2) étant de préférence de l'ordre de 0,5% à 5%.

6. Dispositif de raccord (10 ; 110) selon l'une des revendications 3 à 5, **caractérisé en ce que** les moyens (40) de déplacement comprennent également un ressort frein (49) disposé entre la bague d'embout (20) et le levier (42) et apte à maintenir le levier (42) en position angulaire de verrouillage et/ou de déverrouillage.

7. Dispositif de raccord (10 ; 110) selon l'une des revendications précédentes, **caractérisé en ce que** la bague d'embout (20) comprend un taraudage (25) ménagé au niveau de la cavité intérieure (24), tandis que l'organe intermédiaire (60 ; 160) comprend, sur une surface cylindrique externe (62 ; 162) du corps (61 ; 161), un filetage (65 ; 165) complémentaire du taraudage (25).

8. Dispositif de raccord (10) selon l'une des revendications 1 à 7, **caractérisé en ce que** le coulisseau (71) est mobile perpendiculairement à l'axe longitudinal (X60) du corps (61) de l'organe intermédiaire (60) et présente un logement (74) traversé par l'élément de raccord (2) lorsque celui-ci est introduit dans l'organe intermédiaire (60), ce logement étant muni d'un décrochement radial (75) pour le blocage de l'élément de raccord (2) selon la direction avant (D'1).

9. Dispositif de raccord (10) selon la revendication 8, **caractérisé en ce que** le coulisseau (71) comprend un lamage de sécurité (77) apte à recevoir l'élément de raccord (2) en butée suivant la direction avant (D'1), ce lamage de sécurité (77) couvrant un secteur angulaire (79) d'au moins 200° autour d'un axe central (X77) du lamage de sécurité (77).

10. Dispositif de raccord (110) selon l'une des revendications 1 à 7, **caractérisé en ce que** le mécanisme de verrouillage (170) comprend une bague (171) mobile parallèlement à l'axe longitudinal (X60) du corps (161) de l'organe intermédiaire (160) autour du corps (161) entre, d'une part, une position de verrouillage des billes (184) dans l'élément de raccord (102) pour le blocage de l'élément de raccord (102) par rapport à l'organe intermédiaire (160) et, d'autre part, une position de libération des billes (184) pour le retrait de l'élément de raccord (102) hors de l'organe intermédiaire (160).

11. Dispositif de raccord (110) selon les revendication 7 et 10, **caractérisé en ce que** la bague (171) recouvre au moins partiellement le filetage (165) de l'organe intermédiaire (160) dans la position de libération des billes (184).

12. Dispositif de raccord (10 ; 110) selon l'une des revendications précédentes, **caractérisé en ce qu'**au moins une partie d'appui parmi la partie d'appui (9) de l'élément de raccord (2 ; 102) et la partie d'appui (39) du corps d'embout (30) est une surface tronconique.

13. Dispositif de raccord (10 ; 110) selon l'une des revendications précédentes, **caractérisé en ce qu'**il est configuré comme un élément femelle adapté pour recevoir un élément de raccord mâle (2 ; 102), avec la partie d'appui (39) du corps d'embout (30) qui reçoit en contact étanche une partie d'appui (9) de l'élément de raccord mâle (2 ; 102)

14. Raccord (R10 ; R110) adapté pour transmettre des fluides sous pression, **caractérisé en ce qu'**il comprend :
- un dispositif de raccord (10; 110) selon l'une des revendications précédentes, relié à la première canalisation,
- ainsi qu'un élément de raccord (2 ; 102) qui est couplé au dispositif de raccord (10 ; 110) et relié à la deuxième canalisation.

15. Raccord (10 ; 110) selon la revendication 14, **caractérisé en ce que**, alors que la partie d'appui (39) du corps d'embout (30) est en contact avec une partie d'appui (9) appartenant à l'élément de raccord (2 ; 102), le déplacement du corps d'embout (30) par rapport à l'élément de raccord (2 ; 102) suivant la direction avant (D1) par le biais des moyens de déplacement (40) est apte à réaliser le contact étanche entre la partie d'appui (39) du corps d'embout (30) et la partie d'appui (9) appartenant à l'élément de raccord (2 ; 102) pour le raccordement étanche des première et deuxième canalisations.

16. Raccord (10 ; 110) selon la revendication 15, **caractérisé en ce que** le contact étanche entre la partie d'appui (39) du corps d'embout (30) et la partie d'appui (9) de l'élément de raccord mâle (2 ; 102) se fait par contact direct des deux surfaces formant les parties d'appui (9 ; 39).

17. Raccord selon la revendication 15, **caractérisé en ce que** l'une des deux surfaces formant les parties d'appui (9 ; 39) reçoit un joint d'étanchéité et **en ce que** le contact étanche entre la partie d'appui (39) du corps d'embout (30) et la partie d'appui (9) de l'élément de raccord mâle (2 ; 102) se fait par l'intermédiaire du joint d'étanchéité.

## Patentansprüche

1. Kupplungsvorrichtung (10; 110), die ausgebildet ist, unter Druck stehende Fluide zu übertragen, wobei diese Kupplungsvorrichtung (10; 110) an eine erste Leitung angeschlossen ist und ausgeführt ist, sich mit einem Kupplungselement (2; 102) zusammenzukuppeln, das an eine zweite Leitung angeschlossen ist, mit einem ersten Teil (2; 102), gewählt aus der Vorrichtung und dem Kupplungselement, das als Einsteckelement ausgebildet ist, und einem zweiten Teil (10; 210), gewählt aus der Vorrichtung und dem Kupplungselement, das als Aufnahmeelement ausgebildet ist, wobei die Kupplungsvorrichtung (10; 110) umfasst:
- einen Ansatzkörper (30), der einen Anlagebereich (39) aufweist und einen Innenkanal (36) für die Strömung eines Fluids in der Kupplungsvorrichtung (10; 110) begrenzt, wobei der Ansatzkörper (30) an die erste Leitung angeschlossen ist, der Anlagebereich (39) des Ansatzkörpers (30) geeignet ist, in dichten Kontakt mit dem Kupplungselement (2; 102) für den dichten Anschluss der ersten und zweiten Leitung zu kommen,
- eine Ansatzhülse (20), die mit einem Innenhohlraum (24), der sich im Wesentlichen gemäß einer Längsachse (X50) erstreckt und der von dem Innenkanal (36) für die Fluidströmung isoliert ist, sowie einer ein Gewinde aufweisenden Radialfläche (23) ausgerüstet ist,
- Mittel (40) zur Verschiebung des Ansatzkörpers (30) in dem Innenhohlraum (24) der Ansatzhülse (20) gemäß mindestens einer Vorwärtsrichtung (D1) parallel zur Längsachse (X50) der Ansatzhülse (20), und
- ein Zwischenelement (60; 160), das einen Körper (61; 161) aufweist, der sich gemäß einer Längsachse (X60) erstreckt und der mit einer Radialfläche (62) ausgestattet ist, die ein Gewinde (65; 165) komplementär zum Gewinde (25) der Ansatzhülse (20) aufweist,
**dadurch gekennzeichnet, dass** das Zwischenelement (60; 160) auch einen Verriegelungsmechanismus (70; 170) aufweist, der mindestens ein Gleitstück (71) oder Kugeln (184) umfasst, das bzw. die radial zur Längsachse (X50) zwischen einerseits einer Blockierstellung, in der der Verriegelungsmechanismus geeignet ist, das in das Zwischenelement (60; 160) eingefügte Kupplungselement (2; 102) in Bezug auf das Zwischenelement (60; 160) gemäß mindestens einer Vorderrichtung (D'1) parallel zur Längsachse (X60) des Körpers (61) zu blockieren, und andererseits einer Freigabestellung, in der der Verriegelungsmechanismus (70; 170) das Zurückziehen des Kupplungselements (2; 102) aus dem Zwischenelement (60; 160) zulässt, beweglich ist bzw. sind,
und dass, wenn das Zwischenelement (60; 160) von der Ansatzhülse (20) abgekuppelt ist, der Verriegelungsmechanismus (70; 170) geeignet ist, sich in seiner Blockierstellung zu befinden, in der das Gleitstück (71) oder die Kugeln (184) das Kupplungselement (2; 102) gemäß mindestens der Vorwärtsrichtung (D'1) blockiert bzw. blockieren.

2. Kupplungsvorrichtung (10; 110) nach Anspruch 1, **dadurch gekennzeichnet, dass** der Verriegelungsmechanismus (70; 170) geeignet ist, zumindest teilweise in einer Nut (404) gelagert zu werden, die in dem Kupplungselement (2; 102) eingearbeitet ist.

3. Kupplungsvorrichtung (10; 110) nach einem der vorhergehenden Ansprüche, **dadurch gekennzeichnet, dass** die Mittel (40) zur Verschiebung des Ansatzkörpers (30) einen Hebel (42) und einen in der Ansatzhülse (20) schwenkenden Nocken (44) umfassen.

4. Kupplungsvorrichtung (10; 110) nach Anspruch 3, **dadurch gekennzeichnet, dass** der Hebel (42) gabelförmig um den Ansatzkörper (30) montiert ist, wobei der Nocken (44) gemäß der Längsachse (X50) der Ansatzhülse (20) zwischen einer Schulter (34) des Ansatzkörpers (30) und einer Schulter (27) der Ansatzhülse (20) angeordnet ist.

5. Kupplungsvorrichtung (10; 110) nach Anspruch 3 oder 4, **dadurch gekennzeichnet, dass** der Nocken mindestens eine Außenfläche (46) mit einer Verriegelungsbreite (L1) und einer Entriegelungsbreite (L2), die geringer ist als die Verriegelungsbreite (L1), aufweist, wobei ein Abstand zwischen der Verriegelungsbreite (L1) und der Entriegelungsbreite (L2) vorzugsweise in der Größenordnung von 0,5% bis 5% liegt.

6. Kupplungsvorrichtung (10; 110) nach einem der Ansprüche 3 bis 5, **dadurch gekennzeichnet, dass** die Mittel (70) zur Verschiebung auch eine Bremsfeder (49) umfassen, die zwischen der Ansatzhülse (20) und dem Hebel (42) angeordnet ist und geeignet ist, den Hebel (42) in einer Winkelstellung der Verriegelung und/oder der Entriegelung zu halten.

7. Kupplungsvorrichtung (10; 110) nach einem der vorhergehenden Ansprüche, **dadurch gekennzeichnet, dass** die Ansatzhülse (20) ebenfalls ein Innengewinde (25) umfasst, das an dem Innenhohlraum (24) angeordnet ist, während das Zwischenelement (60; 160) auf einer zylindrischen Außenfläche (62, 162) des Körpers (61; 161) ein Gewinde (65; 165) komplementär zum Innengewinde (25) umfasst.

8. Kupplungsvorrichtung (10) nach einem der Ansprüche 1 bis 7, **dadurch gekennzeichnet, dass** das Gleitstück (71) senkrecht zur Längsachse (X60) des Körpers (61) des Zwischenelements (60) beweglich ist und einen Aufnahmeraum (74) aufweist, der von dem Kupplungselement (2) durchquert wird, wenn dieses in das Zwischenelement (60) eingeführt ist, wobei dieser Aufnahmeraum mit einem radialen Absatz (75) für die Blockierung des Kupplungselements (2) gemäß der Vorwärtsrichtung (D'1) ausgerüstet ist.

9. Kupplungsvorrichtung (10) nach Anspruch 8, **dadurch gekennzeichnet, dass** das Gleitstück (71) eine Sicherheitsabsenkung (77) umfasst, die geeignet ist, das Kupplungselement (2) gemäß der Vorwärtsrichtung (D'1) mit Anschlag aufzunehmen, wobei diese Sicherheitsabsenkung (77) einen Winkelsektor (79) von mindestens 200° um eine Mittelachse (X77) der Sicherheitsabsenkung (77) abdeckt.

10. Kupplungsvorrichtung (110) nach einem der Ansprüche 1 bis 7, **dadurch gekennzeichnet, dass** der Verriegelungsmechanismus (170) eine Hülse (171) umfasst, die parallel zur Längsachse (X60) des Körpers (161) des Zwischenelements (160) um den Körper (161) herum zwischen einerseits einer Verriegelungsstellung der Kugeln (184) in dem Kupplungselement (102) für die Blockierung des Kupplungselements (102) in Bezug auf das Zwischenelement (160) und andererseits einer Freigabestellung der Kugeln (184) für das Zurückziehen des Kupplungselements (102) aus dem Zwischenelement (160) beweglich ist.

11. Kupplungsvorrichtung (110) nach Anspruch 7 und 10, **dadurch gekennzeichnet, dass** die Hülse (171) mindestens teilweise das Gewinde (165) des Zwischenelements (160) in der Freigabestellung der Kugeln (184) bedeckt.

12. Kupplungsvorrichtung (10; 110) nach einem der vorhergehenden Ansprüche, **dadurch gekennzeichnet, dass** mindestens ein Anlagebereich, gewählt aus dem Anlagebereich (9) des Kupplungselements (2; 102) und dem Anlagebereich (39) des Ansatzkörpers (30), eine kegelstumpfförmige Fläche ist.

13. Kupplungsvorrichtung (10; 110) nach einem der vorhergehenden Ansprüche, **dadurch gekennzeichnet, dass** sie als Aufnahmeelement ausgebildet ist, das geeignet ist, ein Einsteckkupplungselement (2; 102) des Ansatzkörpers (30) aufzunehmen, wobei der Anlagebereich (39) in dichtem Kontakt einen Anlagebereich (9) des Kupplungseinsteckelements (2; 102) aufnimmt.

14. Kupplung (R10; R110), ausgebildet unter Druck stehende Fluide zu übertragen, **dadurch gekennzeichnet, dass** sie umfasst:
- eine Kupplungsvorrichtung (10; 110) nach einem der vorhergehenden Ansprüche, die an die erste Leitung angeschlossen ist,
- sowie ein Kupplungselement (202), das mit der Kupplungsvorrichtung (10; 110) gekuppelt und an die zweite Leitung angeschlossen ist.

15. Kupplung (10; 110) nach Anspruch 14, **dadurch gekennzeichnet, dass**, wenn der Anlagebereich (39) des Ansatzkörpers (30) in Kontakt mit einem Anlagebereich (9) ist, der zu dem Kupplungselement (2; 102) gehört, die Verschiebung des Ansatzkörpers (30) durch die Vorspannung der Mittel (40) zur Verschiebung in Bezug auf das Kupplungselement (2; 102) gemäß der Vorwärtsrichtung (D1) geeignet ist, für den dichten Anschluss der ersten und zweiten Leitung den dichten Kontakt zwischen dem Anlagebereich (39) des Ansatzkörpers (30) und dem Anlagebereich (9), der zu dem Kupplungselement (2; 102)gehört, herzustellen.

16. Kupplung (10; 110) nach Anspruch 15, **dadurch gekennzeichnet, dass** der dichte Kontakt zwischen dem Anlagebereich (39) des Ansatzkörpers (30) und dem Anlagebereich (9) des Kupplungseinsteckelements (2; 102) durch direkten Kontakt der zwei Flächen, die die Anlagebereiche (9; 39) bilden, realisiert wird.

17. Kupplung nach Anspruch 15, **dadurch gekennzeichnet, dass** eine der zwei Flächen, die die Anlagebereiche (9; 39) bilden, eine Dichtung aufnimmt und dass der dichte Kontakt zwischen dem Anlagebereich (39) des Ansatzkörpers (30) und dem Anlagebereich (9) des Kupplungseinsteckelements (2; 102) sich über die Dichtung realisiert.

## Claims

1. A coupling device (10; 110), adapted to transfer pressurized fluids, said coupling device (10; 110) being connected to a first pipe and configured for coupling with a coupling element (2; 102) connected to a second pipe, with a first part (2; 102) among the coupling device and the coupling element that is configured as a male element and a second part (10; 210) among the coupling device and the coupling element that is configured as a female element, the coupling device (10; 110) including:
- an end piece body (30) having a bearing portion (39) and delimiting an internal flow channel (36) of a fluid in the coupling device (10; 110), the end piece body (30) being connected to the first pipe, the bearing portion (39) of the end piece body (30) being capable of coming into sealing contact with the coupling element (2; 102) for sealingly coupling the first and second pipes,
- an end piece ring (20) provided with an inner cavity (24) which extends generally along a longitudinal axis (X50) and which is isolated from the internal fluid flow channel (36), and with a radial surface (23) having an external thread (25),
- displacement means (40) for displacing the end piece body (30), in at least one forward direction (D1) parallel to the longitudinal axis (X50) of the end piece ring (20), inside the inner cavity (24) of the end piece ring (20), and
- an intermediate member (60; 160) having a body (61; 161) which extends along a longitudinal axis (X60) and which is provided with a radial surface (62) having an external thread (65; 165) complementary to the external thread (25) of the end piece ring (20),
**characterized in that** the intermediate member (60; 160) also includes a locking mechanism (70; 170) comprising at least a slide (71) or balls (184), movable radially to the longitudinal axis (X50) between, on the one hand, a blocking position wherein the locking mechanism is able to block the coupling element (2; 102) introduced into the intermediate member (60; 160) with respect to the intermediate member (60; 160), in at least one forward direction (D'1) parallel to the longitudinal axis (X60) of the body (61) and, on the other hand, a position where the locking mechanism (70;170) allows for the coupling element (2; 102) to be withdrawn from the intermediate member (60;160),
and **in that** while the intermediate member (60; 160) is uncoupled from the end piece ring (20), the locking mechanism (70; 170) is able to be located in the blocking position thereof, in which the slide (71) or the balls (184) block the coupling element (2; 102) in at least the forward direction (D'1).

2. The coupling device (10; 110) according to claim 1, **characterized in that** the locking mechanism (70; 170) is capable of being housed at least partially inside a groove (4; 104) made in the coupling element (2; 102).

3. The coupling device (10; 110) according any of the preceding claims, **characterized in that** the displacement means (40) for displacing the end piece body (30) include a lever (42) and a cam (44) pivoting in the end piece ring (20).

4. The coupling device (10; 110) according to claim 3, **characterized in that** the lever (42) is clevis-mounted around the end piece body (30), the cam (44) being interposed along the longitudinal axis (X50) of the end piece ring (20) between a shoulder (34) of the end piece body (30) and a shoulder (27) of the end piece ring (20).

5. The coupling device (10; 110) according to claim 3 or 4, **characterized in that** the cam (44) has at least one outer surface (46), with a locking width (L1) and a unlocking width (L2) which is smaller than the locking width (L1), a difference between the locking width (L1) and the unlocking width (L2) being preferably on the order of 0.5 % to 5 %.

6. The coupling device (10; 110) according to any of claims 3 to 5, **characterized in that** the displacement means (40) also include a brake spring (49) arranged between the end piece ring (20) and the lever (42) and capable of holding the lever (42) in an angular locking and/or unlocking position.

7. The coupling device (10; 110) according any of the preceding claims, **characterized in that** the end piece ring (20) includes an internal thread (25) made at the inner cavity (24), while the intermediate member (60; 160) includes, on an external cylindrical surface (62; 162) of the body (61; 161), an external thread (65; 165) complementary to the internal thread (25).

8. The coupling device (10) according to any of claims 1 to 7, **characterized in that** the slide (71) is movable perpendicularly to the longitudinal axis (X60) of the body (61) of the intermediate member (60) and has a housing (74) traversed by the coupling element (2) when the latter is introduced into the intermediate member (60), said housing being provided with a radial detachment (75) for blocking the coupling element (2) in the forward direction (D'1).

9. The coupling device (10) according to claim 8, **characterized in that** the slide (71) includes a safety counterbore (77) capable of receiving the coupling element (2) in abutment in the forward direction (D'1), said safety counterbore (77) covering an angular sector (79) of at least 200° about a center axis (X77) of the safety counterbore (77).

10. The coupling device (110) according to any of claims 1 to 7, **characterized in that** the locking mechanism (170) includes a ring (171) movable in parallel to the longitudinal axis (X60) of the body (161) of the intermediate member (160) around the body (161) between, on the one hand, a position for locking the balls (184) in the coupling element (102) so as to block the coupling element (102) with respect to the intermediate member (160) and, on the other hand, a position for releasing the balls (184) for withdrawal of the coupling element (102) from the intermediate member (160).

11. The coupling device (110) according to claim 7 and 10, **characterized in that** the ring (171) at least partially covers the external thread (165) of the intermediate member (160) in the position for releasing the balls (184)

12. The coupling device (10; 110) according any of the preceding claims, **characterized in that** at least one bearing portion among the bearing portion (9) of the coupling element (2; 102) and the bearing portion (39) of the end piece body (30) is a frustoconical surface,

13. The coupling device (10; 110) according any of the preceding claims, **characterized in that** it is configured as a female element suitable for receiving a male coupling element (2; 102), with the bearing portion (39) of the end piece body (30) receiving in sealing contact a bearing portion (9) of the male coupling element (2; 102).

14. A connector (R10; R110), adapted to transfer pressurized fluids, **characterized in that** it includes:
- a coupling device (10; 110) according any of the preceding claims, connected to the first pipe,
- as well as a coupling element (2; 102) which is coupled with the coupling device (10; 110) and connected to the second pipe

15. The connector (R10; R110) according to claim 14, **characterized in that**, while the bearing portion (39) of the end piece body (30) is touching a beanng portion (9) belonging to the coupling element (2; 102), the displacement of the end piece body (30) with respect to the coupling element (2, 102) in the forward direction (D1) via the displacement means (40) is capable of establishing the sealing contact between the bearing portion (39) of the end piece body (30) and the bearing portion (9) belonging to the coupling element (2; 102) for sealingly coupling the first and second pipes.

16. The connector (R10; R110) according to claim 15, **characterized in that** the sealing contact between the bearing portion (39) of the end piece body (30) and the bearing portion (9) of the male coupling element (2; 102) is made by direct contact of the two surfaces forming the bearing portions (9; 39).

17. The connector according to claim 15, **characterized in that** one of both surfaces forming the bearing portions (9; 39) receives a gasket, and **in that** the sealing contact between the bearing portion (39) of the end piece body (30) and the bearing portion (9) of the male coupling element (2; 102) is made via the gasket.
